# EUROPÄISCHE PATENTANMELDUNG

(11) **EP 1 531 351 A2**
(43) Veröffentlichungstag der Anmeldung: **18.05.2005**
(21) Anmeldenummer: 04026970.6
(22) Anmeldetag: 12.11.2004
(51) Int. Cl.: G02B 6/38

(54) **Vorrichtung zum Anbringen eines Spleissschutzes an Lichtwellenleitern**

(30) Priorität: 17.11.2003 DE 10353736
(71) Anmelder: TKM Telekommunikation und Elektronik GmbH, 41238 Mönchengladbach (DE)
(72) Erfinder: Gerlach, Bernd, 64297 Darmstadt (DE); Feltgen, Reinhard, 52477 Alsdorf (DE)
(74) Vertreter: Meyer, Ludgerus A.

(57) **Zusammenfassung**

Die Erfindung betrifft eine Vorrichtung zur Verpressung eines Spleißschutzelementes (1) zur Aufnahme einer Spleißverbindung von Lichtwellenleiterenden. Erfindungsgemäß wird eine Pressenanordnung mit einem einen Amboss (20) enthaltenen Basisteil (2) und einem über eine Gelenkverbindung (11) mit dem Basisteil (2) verbundenen Anpressteil (4) verwendet. Im geöffneten Zustand der Pressanordnung ist ein V-förmiges Spleißschutzelement (1) in die Pressenanordnung einsetzbar, in das der Lichtwellenleiter mit Spleißverbindung einlegbar ist. Eine Anzahl von Spleißschutzelementen befindet sich in einem Einschubelement (3) des Basisteils. Durch Betätigung der Pressenanordnung durch Zusammendrücken von Basisteil (2) und Anpressteil (4) schließt das Spleißschutzelement (1) den eingelegten Lichtwellenleiter mit Spleißverbindung luftdicht und feuchtedicht ein. Die Vorrichtung ist insbesondere als Wegwerfeinheit mit einer bestimmten Zahl von Spleißschutzelementen einsetzbar.

## Beschreibung

Die Erfindung betrifft eine Vorrichtung zur Verpressung eines Spleißschutzelementes zur Aufnahme einer Spleißverbindung von Lichtwellenleiterenden.

Die heute im großen Umfang in der Kommunikationstechnik verwendeten Lichtwellenleiter, die aus einer dünnen, ummantelten Glasfaser bestehen, müssen an Kopplungsstellen häufig miteinander verschweißt werden. Um die Übertragungseigenschaften eines Lichtwellenleiters nicht zu verschlechtern, werden Lichtwellenleiterenden in der Regel durch Fusionsschweißen miteinander verbunden. Die so erzeugte Spleißverbindung ist wegen fehlender Ummantelung an dieser Stelle mechanisch und gegen Umwelteinflüsse jedoch äußerst empfindlich und ist daher geeignet zu schützen.

Hierzu ist es z. B. aus der DE 33 45 222 C2 bekannt, die Spleißverbindung durch Aufnahme zwischen zwei seitlich angeordnete Plättchen, die mit einem klebenden Material beschichtet sind, zu umgeben. Anstelle zweier getrennter Plättchen ist es üblich geworden, im Ausgangszustand V-förmig ausgebildete Spleißschutzelemente zu verwenden, die nach Aufnahme einer Spleißverbindung durch eine geeignete Presseinrichtung zusammengedrückt werden. Nach dem Zusammendrücken der Spleißschutzelemente sind die Spleißverbindungen in dem dauerplastischen Material sowohl dauerhaft gegen äußere Einflüsse, als auch mechanisch gesichert. Die Spleißverbindung bleibt auch luft- und wasserdicht ummantelt.

Damit ein ordnungsgemäßes Verfließen der dauerelastischen Dichtmasse um die Spleißverbindung gesichert ist, ist während des Zusammendrückens des Spleißschutzelementes eine sichere Faserführung erforderlich. Ferner ist eine hohe Maßhaltigkeit zum späteren Einbau in einen Spleißschutzhalter erforderlich.

Aus der DE 37 10 089 C1 ist eine Pressvorrichtung zum Anbringen eines Spleißschutzelementes an Lichtwellenleitern bekannt geworden, bei dem zwei gegenüberliegende Druckplatten im Ausgangszustand einen Aufnahmebereich für ein Spleißschutzelement bilden, in das die Lichtleitfaser eingelegt werden kann. Bei einer Abwärtsbewegung der über ein Gelenk miteinander verbundenen Druckplatten wird der Aufnahmebereich zusammengedrückt, so dass das Spleißschutzelement den eingelegten Lichtwellenleiter einschließt.

Obgleich diese Vorrichtung prinzipiell ein definiertes Verklemmen des Spleißschutzelementes ermöglicht, zeigen sich jedoch in der Praxis Unzulänglichkeiten. Da die Vorrichtung nur eine eingeschränkte Faserführung ermöglicht, kann es leicht passieren, dass der Lichtwellenleiter nicht genau zentrisch durch das Spleißelement geführt ist. Da die Vorrichtung ferner für Dauereinsatz vorgesehen ist, lässt sich ein Verschleiß der Klemmbacken oder der Führungsbereiche für die Druckplatten nicht ohne weiteres feststellen, so dass es zu Fehlpressungen kommen kann, die wirtschaftlich erhebliche Kosten verursachen können, insbesondere, wenn eine Lichtleiterverbindung unterirdisch in einem Kommunikationskanal erstellt wurde.

Aus der DE 40 26 899 A1 ist eine Verpackung für mehrere Spleißschutzelemente bekannt, wie sie in der Vorrichtung gemäß der DE 37 10 089 C1 verwendet werden können. Die Verpackung entspricht einer sogenannten Blisterverpackung mit abziehbarer Abdeckung. Die einzelnen Spleißschutzelemente sind lose in der Verpackung aufgenommen. Wenn die Verpackung unachtsam geöffnet wird, können Spleißschutzelemente aus der Verpackung herausfallen und verschmutzt werden. Dies tritt insbesondere im rauen Baustellenbetrieb auf. Die Verwendung eines verschmutzten Spleißschutzelementes kann zu einer Fehlfunktion der Spleißverbindung führen.

Aus der DE 41 25 840 A1 ist eine Vorrichtung zur Verpressung eines Spleißschutzelementes zur Aufnahme einer Spleißverbindung von Lichtwellenleiterenden bekannt, bei der die Presse ein einen Amboss enthaltendes Basisteil und ein Anpressteil aufweist, die über eine Gelenkverbindung miteinander verbunden sind.

Durch Betätigung der Presse kann ein in eine Aufnahme eingelegtes Spleißschutzelement zusammengedrückt werden und damit eine Spleißverbindung schützen. Die zu verarbeitenden Spleißschutzelemente werden offenbar aus einem gesonderten Behältnis entnommen.

Der Erfindung liegt die Aufgabe zugrunde, eine Vorrichtung zur Verpressung eines Spleißschutzelementes zur Aufnahme einer Spleißverbindung von Lichtwellenleiterenden anzugeben, die verschleiß- und verschmutzungsunauffällig ist, eine definierte, sichere Verpressung des Spleißschutzelementes ermöglicht, und einfach und kostengünstig herstellbar und verwendbar ist.

Diese Aufgabe wird durch die in den Patentansprüchen 1 bzw. 4 angegebene Erfindung gelöst. Vorteilhafte Weiterbildungen der Erfindung sind in Unteransprüchen angegeben.

Die Erfindung betrifft insbesondere eine Pressenanordnung mit einem einen Amboss enthaltenen Basisteil und einem über eine Gelenkverbindung mit dem Basisteil verbundenen Anpressteil, bei dem im geöffneten Zustand der Pressenanordnung zwischen dem Amboss des Basisteils und dem Anpressteil ein Aufnahmebereich ausgebildet ist, in den ein im wesentlichen V-förmiges längliches Spleißschutzelement einsetzbar ist. Darin ist dann die Spleißverbindung einlegbar, und durch Betätigung der Pressenanordnung durch Zusammendrücken von Basisteil und Anpressteil schließt das Spleißschutzelement die eingelegte Spleißverbindung der Lichtwellenleiterenden ein.

Die erfindungsgemäße Vorrichtung ist insbesondere quaderförmig in einer Größe gestaltet, die etwa einer Musikkassette entspricht. Sie ist insbesondere aus Kunststoff ausgebildet, wobei die Verbindung zwischen Basisteil und Anpressteil über eine Zapfenlagerung gebildet ist. Im Ausgangszustand der Vorrichtung sind Anpressteil und Basisteil z. B. im 45° vom Winkel zueinander angeordnet. In diesem Zustand bildet sich zwischen Basisteil und Anpressteil ein Aufnahmeraum, in den ein Spleißschutzelement einlegbar ist. Nachdem der Lichtwellenleiter mit seiner Spleißverbindung in das Spleißschutzelement eingelegt ist, lässt sich das Anpressteil herunterdrücken, so dass der Aufnahmebereich für das Spleißschutzelement zusammengedrückt und damit das Spleißschutzelement von einer im Spleißschutzelement enthaltenen plastischen Dichtungsmasse umflossen wird.

Die erfindungsgemäße Vorrichtung ist insbesondere für eine bestimmte Anzahl, z. B. 15 Spleißschutzelemente, verwendbar und kann dann weggeworfen werden. Damit lassen sich definierte Pressbedingungen schaffen, so dass ein Verschleiß der Vorrichtung über die vorgesehene Einsatzdauer ausgeschlossen werden kann.

Der erfindungsgemäßen Vorrichtung ist insbesondere ein Einschubelement zugeordnet, das schubladenförmig in das Basisteil eingreift. In diesem Einschubelement sind eine Zahl, z. B. 15, Spleißschutzelemente aufgenommen, so dass nach deren Verbrauch die Funktion der Vorrichtung erfüllt ist.

Zwischen Anpressteil und Basisteil befindet sich vorzugsweise eine Halteverbindung, welche in geschlossener Stellung der Pressenanordnung eine Rastverbindung zwischen Anpressteil und Basisteil herstellt. Damit lässt sich ein definierter Endzustand des Pressvorgangs tasten und hören.

Um eine definierte Führung der verspleißten Lichtwellenleiterenden in der erfindungsgemäßen Vorrichtung zu ermöglichen, befinden sich vorzugsweise beidseitig des Aufnahmebereichs Führungskanäle, die insbesondere mit einer inneren Haftbeschichtung versehen sind. Wenn der Lichtwellenleiter in diese Führung eingelegt ist, verbleibt er in definierter Stellung und kann sich während des Pressvorgangs nicht unzulässig verlagern. Dies ergibt eine erhöhte Sicherheit gegen Fehlpressungen.

In einer alternativen Ausführungsform, insbesondere für einen Einsatz in feuchten Umgebungen, können anstelle einer Haftbeschichtung auch flexible Klemmelemente verwendet werden, die aus etwa dreieckförmigen mit ihren Spitzen gegenüberstehenden und im Führungskanal befestigten Klemmstücken gebildet sind, wobei die Lichtleitfaser während des Pressvorgangs in den zwischen den Spitzen gebildeten Spalt einklemmbar ist.

In einer Weiterbildung kann auch vorgesehen sein, dass die gegenüberstehenden Klemmelemente derart ausgebildet sind, dass ein Klemmteil am Anpressteil und das gegenüberstehende Klemmteil am Basisteil befestigt ist. Im entlasteten Zustand der Presse kann die Lichtleitfaser damit frei in den gebildeten Spalt eingelegt und nach Beendigung der Pressung daraus ohne Belastung entnommen werden. Sobald die Presse betätigt wird, wird die Lichtleitfaser zwischen den Klemmteilen festgehalten und bleibt aufgrund der Flexibilität der Klemmteile während des gesamten Pressvorgangs fixiert.

Um ferner einen definierten Endzustand des Spleißschutzelementes sicherzustellen, können dem Aufnahmebereich Anschlagmittel, beispielsweise ein oder mehrere am Anpressteil angeordnete erhabene Anschläge zugeordnet sein, die verhindern, dass eine Überpressung des Spleißschutzelementes stattfindet.

Da die erfindungsgemäße Vorrichtung vorzugsweise aus Kunststoff ausgebildet ist, kann möglichen Dehnungen der am Pressvorgang beteiligten Elemente bei der Pressung dadurch begegnet werden, dass die Pressfläche des Anpressteils in Längsrichtung bogenförmig ausgestaltet ist. Der Pressdruck führt dann dazu, dass trotz leichter Verdrehung und/oder Verbiegung der Pressfläche beim Pressen ein gleichmäßiger Druck auf das Spleißschutzelement aufgebracht werden kann.

Der in der erfindungsgemäßen Vorrichtung ausgebildete Einschub ist vorzugsweise mit einer bestimmten Zahl von U- oder V-förmig ausgebildeten Aufnahmenfächern ausgestaltet, die jeweils ein Spleißschutzelement aufnehmen. Um zu vermeiden, dass die aufgenommenen Spleißschutzelemente zufällig aus dem Einschub herausfallen können, weisen die Kanäle vorzugsweise innere Haftbeschichtungen auf, die die Spleißschutzelemente festhalten, bis sie von Hand oder mittels einer Pinzette aus den Kanälen entnommen werden. Alternativ kann den Kanälen auch Rastnasen oder flexible Klemmelemente zugeordnet sein, um die Spleißschutzelemente unverlierbar im Einschubelement festzuhalten.

Da die Handhabung der Pressenanordnung vorzugsweise auf einem Arbeitstisch erfolgt, kann ein unbeabsichtigtes Verrutschen bei der Betätigung der Anordnung dadurch verhindert werden, dass das Basisteil unterseitige Haftpunkte aus Silikon, Gummi oder einem anderen geeigneten Haftstoff enthält.

Die Erfindung ist vorzugsweise als Verpackungseinheit mit einer Pressenanordnung und einer bestimmten Zahl von in dem Einschubelement aufgenommenen Spleißschutzelementen verwendbar. Dadurch wird sichergestellt, dass die Pressenanordnung nur für eine bestimmte Zahl von Spleißschutzelementen verwendet wird.

Die verwendeten Spleißschutzelemente weisen vorzugsweise eine innere plastisch verformbare Masse auf, die beim Zusammenpressen von Ambossteil und Basisteil die in das Spleißschutzelement eingelegte Spleißverbindung umfließt. Um eine hohe Längsstabilität des Spleißschutzelementes nach dem Verpressen sicherstellen zu können, weisen die freien Längskanten der Schenkel des Spleißschutzelementes zwei nach innen gerichtete Abkantungen auf, welche nach Zusammenpressen der Schenkel des Spleißschutzelementes aneinander stoßen. Damit wird erreicht, dass das Spleißschutzelement nach dem Verpressen den Lichtwellenleiter einerseits vollständig umschließt und das Spleißschutzelement andererseits eine hohe Biegesteifigkeit erfährt.

Die Erfindung wird nachstehend anhand eines Ausführungsbeispiels näher erläutert. Die Figuren zeigen:
- Fig. 1: eine Ansicht einer erfindungsgemäßen Pressvorrichtung in aufgeklappter Ansicht,
- Fig. 2: den Auslieferungszustand einer Pressvorrichtung nach Fig.1 in zusammengeklappter Ansicht in Schrägansicht,
- Fig. 3: eine Pressvorrichtung gemäß Fig. 2 von unten gesehen,
- Fig. 4: eine Aufsicht einer Pressvorrichtung gemäß Fig. 2,
- Fig. 5: eine Seitenansicht einer Pressvorrichtung gemäß Fig. 2,
- Fig. 6: eine Ansicht einer Pressvorrichtung mit aufgeklapptem Anpressteil und teilweise herausgeschobener Schublade,
- Fig. 7: eine Unteransicht von Fig. 6,
- Fig. 8: eine Seitenansicht von Fig. 6,
- Fig. 9: eine Aufsicht von Fig. 6,
- Fig. 10: eine Pressvorrichtung in aufgeklappter Ansicht mit eingelegtem Lichtleiter,
- Fig. 11: eine Aufsicht einer Ansicht von Fig. 10,
- Fig. 12: den Zustand der Pressvorrichtung mit ausgezogener Schublade mit heruntergedrücktem Anpressteil,
- Fig. 13: eine Ansicht von Fig. 12 von unten,
- Fig. 14: eine Ansicht von Fig. 12 von der Seite, und
- Fig. 15: eine Ansicht von Fig. 12 von oben.

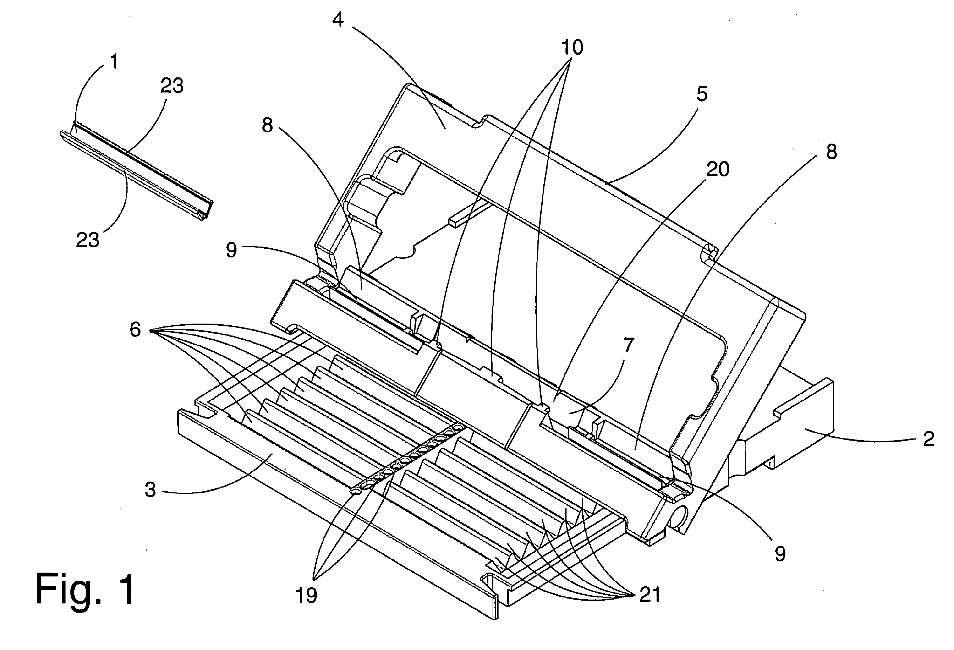

Die in Fig. 1 dargestellte Pressvorrichtung besteht im wesentlichen aus einem quaderförmigen Kunststoffgehäuse mit einem Basisteil 2, in dem eine Schublade 3 aufgenommen ist. Das als Schachtel ausgebildete Basisteil 2 kann entweder an einer Längsseite geöffnet sein oder es können unterseitige Winkel vorgesehen sein, die die Schublade 3 führen. Die Schublade ist ebenfalls aus Kunststoff hergestellt, z. B. ABS-Kunststoff oder einem geeigneten recyclefähigen Material, und weist innenseitige U-förmige oder V-förmige Ausnehmungen auf, die an die aufzunehmenden Spleißschutzelemente in der Größe angepasst sind, so dass jeweils in einer Vertiefung ein Spleißschutzelement 1 aufgenommen ist. Dadurch ergibt sich in der Schublade ein Vorrat 6 an Spleißschutzelementen, die in zwei parallelen Reihen angeordnet sind. Zwischen den Reihen befindet sich ein Steg mit oberseitigen Rastpunkten 19, die in Wirkverbindung mit dem Basisteil 2 stehen. Das Ausziehen der Schublade 3 aus dem Basisteil 2 erfolgt daher rastend in der Weise, dass mit jedem weiteren Rastschritt die Schublade um eine Strecke herausziehbar ist, die dem Teilungsschritt der Ausnehmungen für die Aufnahme der Spleißschutzelemente entspricht. Dadurch wird sichergestellt, dass das Herausziehen nur so weit erfolgt, dass gerade ein Spleißschutzelement freigegeben ist.

Die in der Schublade 3 ausgebildeten Ausnehmungen sind wenigstens über eine Teilstrecke mit einer inneren Haftbeschichtung 21 versehen, um die eingelegten Spleißschutzelemente derart festzuhalten, dass sie nur manuell oder beispielsweise mit einer Pinzette aus der Schublade 3 herausgenommen werden können. Damit wird verhindert, dass sie bei einem zu weiten Herausziehen der Schublade 3 unabsichtlich aus der Schublade herausfallen können. Gerade im rauen Baustellenbereich wird damit die Sicherheit gegen Verschmutzung der Spleißschutzelemente erheblich verbessert.

An einer Längskante des Basisteils 2 sind außenseitige Gelenke 11 ausgebildet, die insbesondere als Zapfengelenke eine Verbindung mit einem Anpressteil 4 herstellen, das bügelförmig ausgebildet ist und geringfügig größer als das Basisteil 2 gestaltet ist, so dass das heruntergeklappte Anpressteil 4 das Basisteil eng, jedoch frei, umgreift. Zur Verbindung mit dem Gelenk 11 weist das Anpressteil seitliche Bohrungen oder Ausnehmungen auf, die über die Zapfen des Gelenks 11 greifen.

Das Anpressteil weist auf der den Gelenken gegenüberliegenden Längsseite ein Rastelement 5 auf, das beim Herunterdrücken des Anpressteils mit dem Basisteil 2 eine Rastverbindung herstellt, die fühlbar und hörbar ist. Damit lässt sich erreichen, dass beim Zusammenpressen der Vorrichtung ein fühl- und hörbarer Endpunkt des Pressvorgangs bemerkbar ist.

An der gelagerten Längskante des Basisteils 4 befindet sich eine Pressfläche 22, die gegenüber einer entsprechend großen Ambossfläche 20 angeordnet ist, die Teil des Basisteils 2 ist. Im aufgeklappten Zustand des Anpressteils 4 bildet sich somit zwischen dem Amboss 20 und der Pressfläche 22 ein V-förmiger Aufnahmebereich 7, in den ein V-förmiges Spleißschutzelement 1 einlegbar ist. An der Außenseite der Pressfläche 22 sind ein oder mehrere Anschläge 10 ausgebildet, die beim Zusammenpressen der Pressvorrichtung gegen den Amboss 20 drücken und damit einen definierten Anschlag des Pressbereichs bilden. Da die gesamte Pressvorrichtung aus Kunststoff ausgebildet ist, kann der Pressdruck dazu führen, dass der die Pressfläche 22 enthaltene Arm des Anpressteils 4 sich beim Pressen verwindet. Daher weist die Pressfläche 22 eine leicht bogenförmige Ausbildung auf, die beim Anpressen die Verwindung oder Verbiegung aufhebt und damit eine gleichmäßige Pressung des Spleißschutzelementes ermöglicht.

Beidseitig des Aufnahmebereichs 7 weist das Anpressteil 4 U- oder V-förmig ausgebildete Faserführungskanäle 8 auf, die mit Haftkleber 9 versehen sind. Ein in die Pressvorrichtung eingelegter Lichtwellenleiter wird daher durch den Haftkleber 9 festgehalten und kann sich während des Pressvorgangs nicht verschieben. Dies erhöht die Sicherheit gegen Fehlpressungen. Alternativ können flexible Klemmelemente verwendet werden.

Die verwendeten Spleißschutzelemente sind insbesondere V-förmig geformte Metallstreifen, die eine innenseitige plastische Masse enthalten, die beim Zusammendrücken eine Lichtleitfaser bzw. eine Spleißstelle umfließt. Die äußeren Kanten der Schenkel des Spleißschutzelementes weisen nach innen gerichtete durchgehende Abkantungen 23 auf, deren Breite so bemessen ist, dass sie einander anstoßen, wenn das Spleißschutzelement zusammengedrückt ist. Damit ergibt sich beim zusammengedrückten Spleißschutzelement eine parallele Ausbildung der Schenkel des Spleißschutzelementes und gleichzeitig eine hohe mechanische Stabilität.

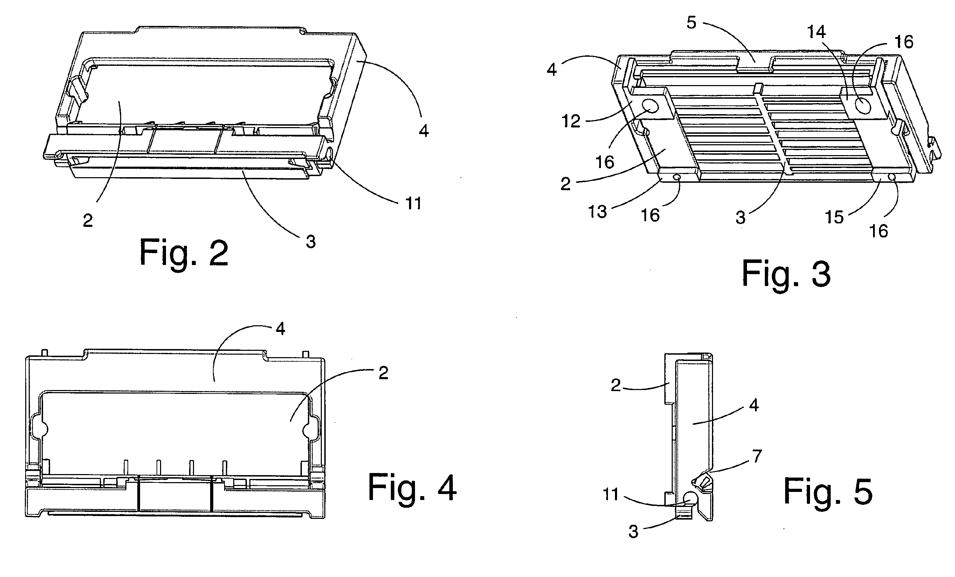

Fig. 2 zeigt eine Pressvorrichtung im Auslieferungszustand mit geschlossener Schublade. Das als Pressbügel ausgebildete Anpressteil 4 umschließt das Basisteil 2. Die Schublade 3 enthält insbesondere 15 Spleißschutzelemente. Es hat sich gezeigt, dass für einen Arbeitsvorgang 12 Spleißschutzelemente erforderlich sind. Drei weitere Spleißschutzelemente werden daher als Reserve vorgehalten. Die in Fig. 2 dargestellte Pressvorrichtung bildet daher zusammen mit den aufgenommen Spleißschutzelementen eine Verkaufseinheit, die leicht in einer üblichen Schachtel aufgenommen sein kann. Nach Verbrauch der enthaltenen Spleißschutzelemente wird die Verpackungseinheit aus Sicherheitsgründen weggeworfen.

Fig. 3 zeigt eine Pressvorrichtung gemäß Fig. 2 in Unteransicht. Die dargestellte Vorrichtung enthält vier Füße 12 - 15, die jeweils mit einem unterseitigen Haftpunkt 16 versehen sind, um ein Verrutschen auf einem Arbeitstisch zu vermeiden. Fig. 3 zeigt auch deutlich das Rastelement 5, das im heruntergedrückten Zustand des Anpressteils 4 eine Nase des Basisteils 2 hintergreift, so dass sich eine stabile Verbindung zwischen Basisteil 2 und Anpressteil 4 ergibt.

Fig. 4 zeigt Basisteil 2 und Anpressteil 4 in Aufsicht, während Fig. 5 die Pressvorrichtung in Seitenansicht zeigt. Es ist deutlich das Gelenk 11 sowie der Bereich 7 zu erkennen, in dem der Lichtwellenleiter verpresst werden kann.

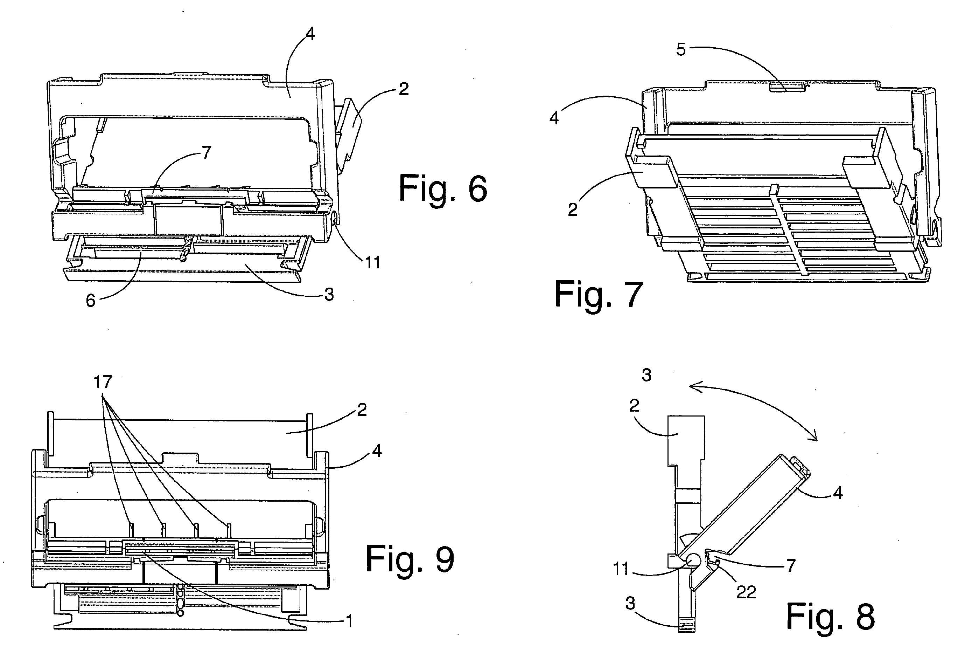

Zur Vorbereitung des Pressvorgangs wird die Schublade 3 aus dem Basisteil 2 herausgezogen und das Anpressteil 4 um etwa 45° nach oben geklappt, wie es in Fig. 6 dargestellt ist. Da die Ausnehmungen in der Schublade mit Haftkleberbeschichtung versehen sind, kann auch bei herausgezogener Schublade kein Spleißschutzelement unabsichtlich aus der Schublade herausfallen.

Fig. 7 zeigt die Unteransicht der Pressvorrichtung mit abgeklapptem Anpressteil. Die Figuren 8 und 9 zeigen die Pressvorrichtung in Seitenansicht bzw. in Aufsicht. Insbesondere Fig. 8 zeigt die Stellung des Anpressteils gegenüber dem Basisteil und den geöffneten Bereich, in den das Spleißschutzelement einlegbar ist. Ferner sind Verstärkungsstege 17 dargestellt, die der Versteifung des Basisteils im Pressbereich dienen.

Es wird nun entweder per Hand oder mittels einer Pinzette ein Spleißschutzelement aus dem Vorrat der Schublade 3 entnommen und in den Aufnahmebereich 7 eingelegt. Im nächsten Schritt wird der Lichtwellenleiter 18 in die Faserführungskanäle 8 eingelegt, wobei die Spleißverbindung in der Mitte des in die Pressvorrichtung eingesetzten Spleißschutzelementes platziert wird. Durch den in den Faserführungskanälen vorhandenen Haftkleber wird der Lichtwellenleiter fixiert und kann während des Pressvorgangs nicht verrutschen.

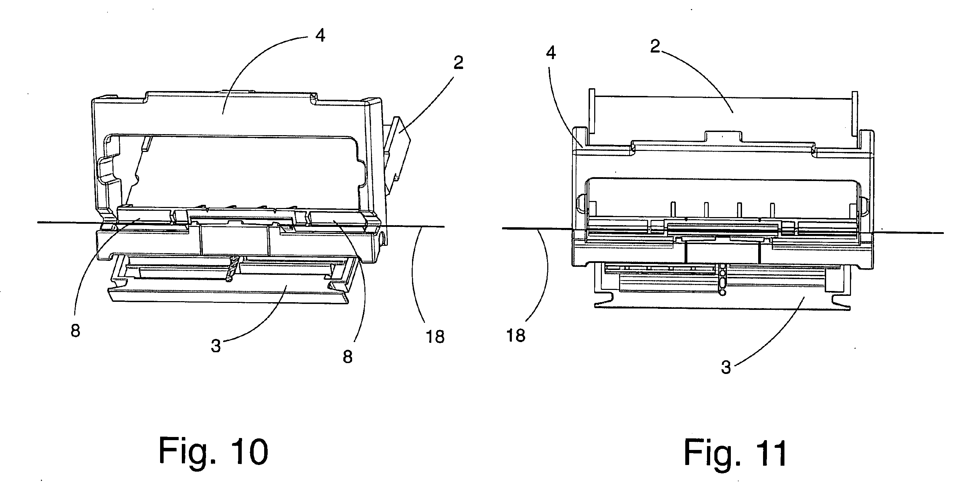

Fig. 10 zeigt den Zustand der Pressvorrichtung mit eingelegtem Lichtwellenleiter in Schrägansicht und Fig. 11 in Aufsicht.

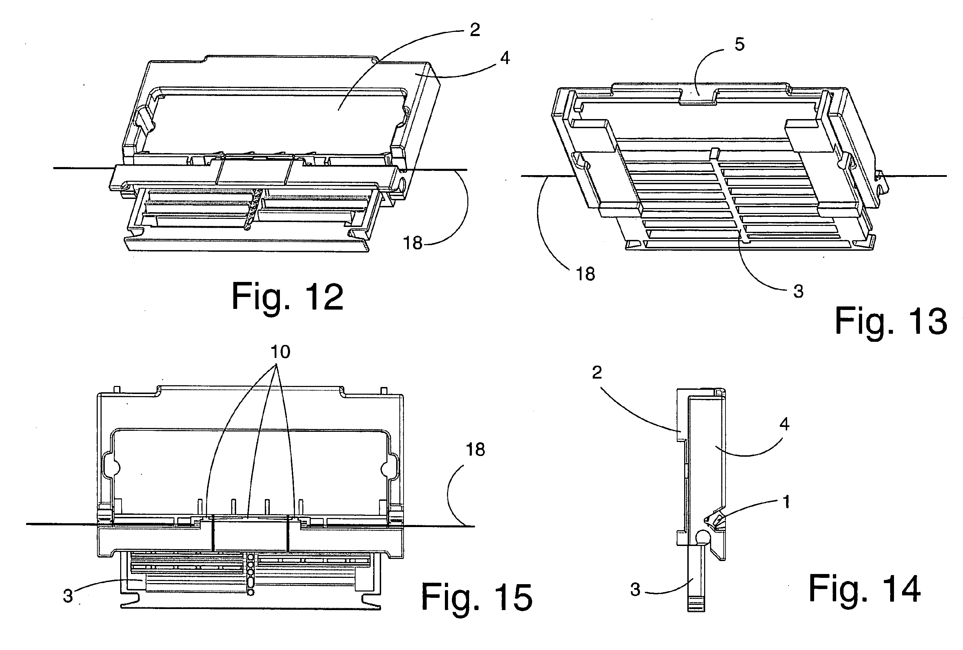

Nun wird gemäß Fig. 12 das Anpressteil 4 gegen das Basisteil 2 gedrückt, wodurch die Pressfläche 22 das Spleißschutzelement 1 gegen den Amboss 20 des Basisteils andrückt. Fig. 12 zeigt den zusammengedrückten Zustand der Pressvorrichtung in Schrägansicht. Fig. 13 zeigt die Pressvorrichtung im zusammengeklappten Zustand in Unteransicht. Dort ist insbesondere das Rastelement 5 dargestellt, das beim Zusammendrücken der Pressvorrichtung hör- und spürbar einrastet. Fig. 15 zeigt die Pressvorrichtung emeut in Aufsicht und Fig. 14 in Seitenansicht. Fig. 15 zeigt auch Anschläge 10, die ein definiertes Crimpmaß bilden.

Nach wenigen Sekunden, nachdem die plastische Masse im Spleißschutzelement den Lichtwellenleiter umflossen hat, kann das Anpressteil 4 wieder vom Basisteil gelöst werden und der mit einem Spleißschutzelement versehene Lichtwellenleiter kann nun entnommen und weiterverarbeitet werden, beispielsweise in einer Spleißkassette untergebracht werden.

### Bezugszeichen

- 1: Spleißschutzelement
- 2: Basisteil
- 3: Schublade
- 4: Anpressteil
- 5: Rastelement
- 6: Vorrat
- 7: Aufnahmebereich
- 8: Faserführungskanal
- 9: Haftkleber
- 10: Anschläge
- 11: Gelenk
- 12: Fuß
- 13: Fuß
- 14: Fuß
- 15: Fuß
- 16: Haftpunkte
- 17: Verstärkungsstäbe
- 18: Lichtwellenleiter
- 19: Rastpunkte
- 20: Amboss
- 21: Haftbeschichtung
- 22: Pressfläche
- 23: Abkantungen

## Patentansprüche

1. Vorrichtung zur Verpressung eines Spleißschutzelementes (1) zur Aufnahme einer Spleißverbindung von Lichtwellenleiterenden (18), wobei eine Pressenanordnung mit einem einen Amboss (20) enthaltenden Basisteil (2) und einem über eine Gelenkverbindung (11) mit dem Basisteil (2) verbundenen Anpressteil (4) vorgesehen sind, bei dem im geöffneten Zustand der Pressenanordnung zwischen dem Amboss (20) des Basisteils (2) und dem Anpressteil (4) ein Aufnahmebereich (7) ausgebildet ist, in den das im wesentlichen v-förmige längliche Spleißschutzelement (1) einsetzbar ist, und in das Spleißschutzelement (1) die Spleißverbindung einlegbar ist, wobei durch Betätigung der Pressenanordnung durch Zusammendrücken von Basisteil (2) und Anpressteil (4) das Spleißschutzelement (1) die eingelegte Spleißverbindung der Lichtwellenleiterenden (18) einschließt, **dadurch gekennzeichnet, dass** das Basisteil (2) ein aus dem Basisteil herausnehmbares Einschubelement (3) enthält, in dem ein Vorrat (6) an Spleißschutzelementen (1) aufnehmbar ist.

2. Vorrichtung nach Anspruch 1, **dadurch gekennzeichnet, dass** das Einschubelement (3) Halterungen zur geordneten Einzelaufnahme von Spleißschutzelementen (1) enthält.

3. Vorrichtung nach Anspruch 2, **dadurch gekennzeichnet, dass** die Halterungen als v-förmige Kanäle ausgebildet sind, die jeweils eine innenseitige Haftbeschichtung (21) enthalten.

4. Vorrichtung zur Verpressung eines Spleißschutzelementes (1) zur Aufnahme einer Spleißverbindung von Lichtwellenleiterenden (18), wobei eine Pressenanordnung mit einem einen Amboss (20) enthaltenden Basisteil (2) und einem über eine Gelenkverbindung (11) mit dem Basisteil (2) verbundenen Anpressteil (4) vorgesehen sind, bei dem im geöffneten Zustand der Pressenanordnung zwischen dem Amboss (20) des Basisteils (2) und dem Anpressteil (4) ein Aufnahmebereich (7) ausgebildet ist, in den das im wesentlichen v-förmige längliche Spleißschutzelement (1) einsetzbar ist, und in das Spleißschutzelement (1) die Spleißverbindung einlegbar ist, wobei durch Betätigung der Pressenanordnung durch Zusammendrücken von Basisteil (2) und Anpressteil (4) das Spleißschutzelement (1) die eingelegte Spleißverbindung der Lichtwellenleiterenden (18) einschließt, **dadurch gekennzeichnet, dass** das Basisteil (2) als im Wesentlichen quaderförmiger Körper mit seitlichen Zapfenlagern (11) zur gelenkigen Lagerung des Anpressteils (4) ausgestaltet ist und dass das Anpressteil (4) einen bügelförmigen im wesentlichen rechteckigen Rahmen bildet, dessen seitlich in den Zapfenlagern (11) des Basisteils (2) gelagerter Längsschenkel eine Pressfläche (22) enthält, welchen dem Amboss (20) des Basisteils (4) gegenüberliegend ausgebildet ist.

5. Vorrichtung nach Anspruch 4, **dadurch gekennzeichnet, dass** die Pressfläche (22) in Längsrichtung bogenförmig ausgestaltet ist.

6. Vorrichtung nach Anspruch 1 oder 4, **dadurch gekennzeichnet, dass** zwischen Anpressteil (4) und Basisteil (2) eine Halteverbindung (5) vorgesehen ist, welche in geschlossener Stellung des Pressenanordnung eine Rastverbindung zwischen Anpressteil (4) und Basisteil (2) herstellt.

7. Vorrichtung nach Anspruch 1 oder 4, **dadurch gekennzeichnet, dass**, dass das Basisteil (2) in Längsrichtung des Aufnahmebereichs (7) Führungskanäle (8) zur Aufnahme der verspleißten Lichtleiterenden (18) aufweist.

8. Vorrichtung nach Anspruch 7, **dadurch gekennzeichnet, dass** die Führungskanäle (8) eine innere Haftbeschichtung (9) aufweisen.

9. Vorrichtung nach Anspruch 7, **dadurch gekennzeichnet, dass** die Führungskanäle beidseitig des Anpressteils Klemmelemente zur lösbaren Fixierung der Lichtleiterenden aufweisen.

10. Vorrichtung nach Anspruch 9, **dadurch gekennzeichnet, dass** die Klemmelemente aus elastischem Kunststoff gebildet sind und einen V-förmigen Klemmspalt aufweisen.

11. Vorrichtung nach Anspruch 9, **dadurch gekennzeichnet, dass** die Klemmelemente zweiteilig ausgebildet sind, wobei ein erstes Klemmteil am Basisteil angeordnet ist und ein dem ersten Teil gegenüberliegendes zweites Klemmteil am Anpressteil derart angeordnet ist, dass im unbetätigten Zustand der Pressenanordnung die Klemmteile einen freien Zwischenraum bilden, in den die Lichtleiterenden einlegbar sind, und dass die flexibel ausgebildeten Klemmteile bei Betätigung der Pressanordnung zusammengedrückt werden, bevor das Spleißschutzelement die Spleißverbindung einschließt, und die Pressenanordnung die Klemmung bis zum Abschluss des Pressvorgangs aufrechterhält.

12. Vorrichtung nach Anspruch 1 oder 4, **dadurch gekennzeichnet, dass** dem Aufnahmebereich (7) Anschlagmittel (10) zur Begrenzung des Druckweges zwischen Anpressteil (4) und Amboss (20) zugeordnet sind.

13. Vorrichtung nach Anspruch 12, **dadurch gekennzeichnet, dass** die Anschlagmittel (10) durch einen oder mehrere am Anpressteil (4) angeordnete erhabene Anschläge (10) ausgebildet sind.

14. Vorrichtung nach einem oder mehreren der vorhergehenden Ansprüche, **dadurch gekennzeichnet, dass** ihre Elemente aus Kunststoff gebildet sind.

15. Vorrichtung nach einem oder mehreren der vorhergehenden Ansprüche, **dadurch gekennzeichnet, dass** das Basisteil (2) unterseitige Haftpunkte (16) aufweist.

16. Verpackungseinheit nach Anspruch 1, bestehend aus einer Pressenanordnung nach einem oder mehreren der vorhergehenden Ansprüche und mit einer bestimmten Zahl von in dem Einschubelement (3) aufgenommenen Spleißschutzelementen (1).

17. Spleißschutzelement zur Verwendung in einer Pressanordnung nach einem oder mehreren der vorhergehenden Ansprüche, **dadurch gekennzeichnet, dass** die Innenseiten der Schenkel des metallischen Spleißschutzelementes (1) mit einer plastisch verformbaren Masse beschichtet sind, die beim Zusammenpressen von Anpressteil und Basisteil die in das Spleißschutzelement eingelegte Spleißverbindung umfließt.

18. Spleißschutzelement nach Anspruch 17, **dadurch gekennzeichnet, dass** die freien Längskanten der Schenkel zueinander gerichtete Abkantungen (23) aufweisen, welche nach dem Zusammenpressen der Schenkel des Spleißschutzelementes (1) aneinander stoßen.
